# EUROPEAN PATENT SPECIFICATION

(11) **EP 1 059 205 B1**
(45) Date of publication and mention of the grant of the patent: **02.07.2003**
(21) Application number: 99810497.0
(22) Date of filing: 07.06.1999
(51) Int. Cl.: B60R 9/06, B60R 9/10

(54) **Load carrier for fastening a load, particularly at least one bicycle and/or moped, to a motorcar**
Lastträger zum Befestigen einer Last, insbesondere eines Fahrrads und/oder Mopeds, an einem Kraftwagen
Porte-charge pour attacher une charge, en particulier une bicyclette et/ou cyclomoteur, à un véhicule automobile

(43) Date of publication of application: 13.12.2000
(73) Proprietor: SCAMBIA INDUSTRIAL DEVELOPMENTS AKTIENGESELLSCHAFT, 9494 Schaan (LI)
(72) Inventor: Poulet, Serge, 77170 Brie Comte Robert (FR)
(74) Representative: Eder, Carl E.

(56) References cited:
- DE-U- 9 109 650
- DE-U- 9 413 102
- FR-A- 2 750 376
- GB-A- 2 197 273
- GB-A- 2 314 060
- NL-A- 8 402 676
- US-A- 5 303 857
- US-A- 5 330 084
- US-A- 5 527 055
- US-A- 5 775 560

## Description

The invention relates to a load carrier for fastening a load, particularly at least one bicycle and/or moped, to a motorcar.

Such load carriers usually have an articulation comprising a first articulation means fastened to a rear element of the motorcar and a second articulation means slewably connected to the first articulation means and rigidly connected to a holding means for holding one or two bicycle(s) and/or moped(s), and a securing means for securing the second articulation means in a normal position. The second articulation means and the holding means are normally, and particularly when the car is driving, in the normal position. The articulation permits to tilt the holding means from the normal position into lower position for making the lid of the trunk or the backdoor of the motorcar accessible.

The first articulation means of known load carriers comprises a fastening plate fastened with several screws to a rear element of the motorcar, and a rod rigidly connecting the fastening plate to two lateral plates disposed at the ends of the rod. The second articulation means comprises two angled arms. Each of these arms is slewably connected to one of said lateral plates by means of a trunnion penetrating a bore of the associated lateral plate. Each trunnion can be blocked by means of a first clamping means including a thread provided on the trunnion and a nut or the like. Each arm is furthermore equipped with a second clamping means including a threaded bolt or screw penetrating an arcuate slot of the associated lateral plate. There are furthermore provided two removable pins. Each of these pins can penetrate bores in one of the arms and in one of the lateral plates, when the second articulation means is in the normal position. The four clamping means and the two pins together form a securing means for securing the second articulation means and the holding means in the normal position. These known load carriers have the drawback that the articulation and the securing means are composed of a great number of initially separate pieces so that the manufacturing and assembling of the articulation and of the securing means are very expensive. Moreover, it is relatively complicated and requires many operations to secure the second articulation means and the holding means in the normal position by means of the various clamping means and the two pins and to release the second articulation means and holding means for tilting these means into the lower position.

A load carrier according to the preamble of claim 1 is known from US-A-5 303 857.

It is accordingly an object of the invention to mitigate disadvantages of the known load carriers. It is particularly intended to provide a load carrier having an articulation and a securing means which possesses only a small number of initially separate parts and can be manufactured and assembled at low costs. Furthermore, the securing means shall permit to secure and release the second articulation means and holding means by simple and quick handling of the securing means.

This object is achieved, according to the invention, by a load carrier with the features of claim 1.

Advantageous refinements of the load carrier are evident from the dependent claims.

The subject of the innovation is now explained with reference to an embodiment shown in the drawings. In the drawings,
Fig. 1 shows an oblique view of a motorcar and of a load carrier, wherein the second articulation means and holding means of the load carrier are in the normal position,
Fig. 2 shows the same parts as Fig. 1, but in the lower position of the second articulation means and holding means,
Fig. 3 shows a vertical section through the load carrier in the longitudinal direction of the motorcar in the normal position of the second articulation means and holding means,
Fig. 4 shows a schematic section through the articulation of the load carrier along the line IV-IV of Fig. 3,
Fig. 5 shows a detail of Fig. 4 in larger size,
Fig. 6 shows a top view of the support of the first articulation means,
Fig. 7 shows a section through the support along the line VII-VII of Fig. 6,
Fig. 8 shows an end view of the support,
Fig. 9 shows a side elevation of the pivot body of the second articulation means,
Fig. 10 shows an end view of the pivot body,
Fig. 11 shows a top view of the pivot body,
Fig. 12 shows a detail of Fig. 3 in larger size, wherein the second articulation means and the holding means are in the normal position,
Fig. 13 shows an analogous section as Fig. 12, but in an intermediate position of the second articulation means and holding means,
Fig. 14 shows an analogous section as Fig. 12, but in another intermediate position, and
Fig. 15 shows an analogous section as Fig. 12, but in the lower position of the second articulation means and holding means.

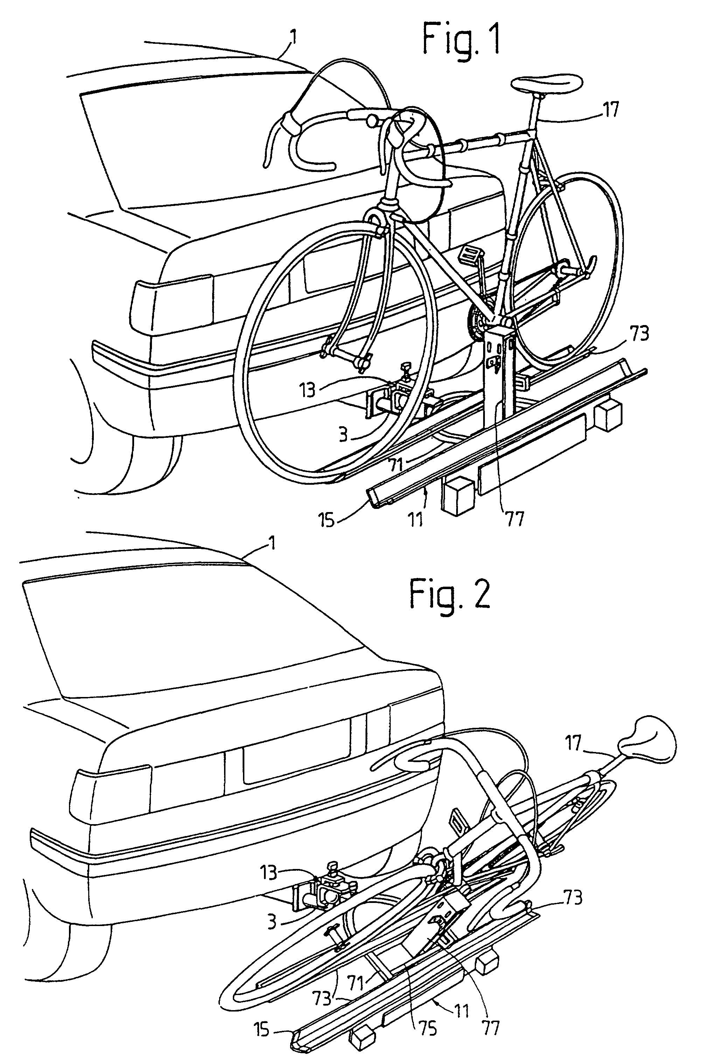

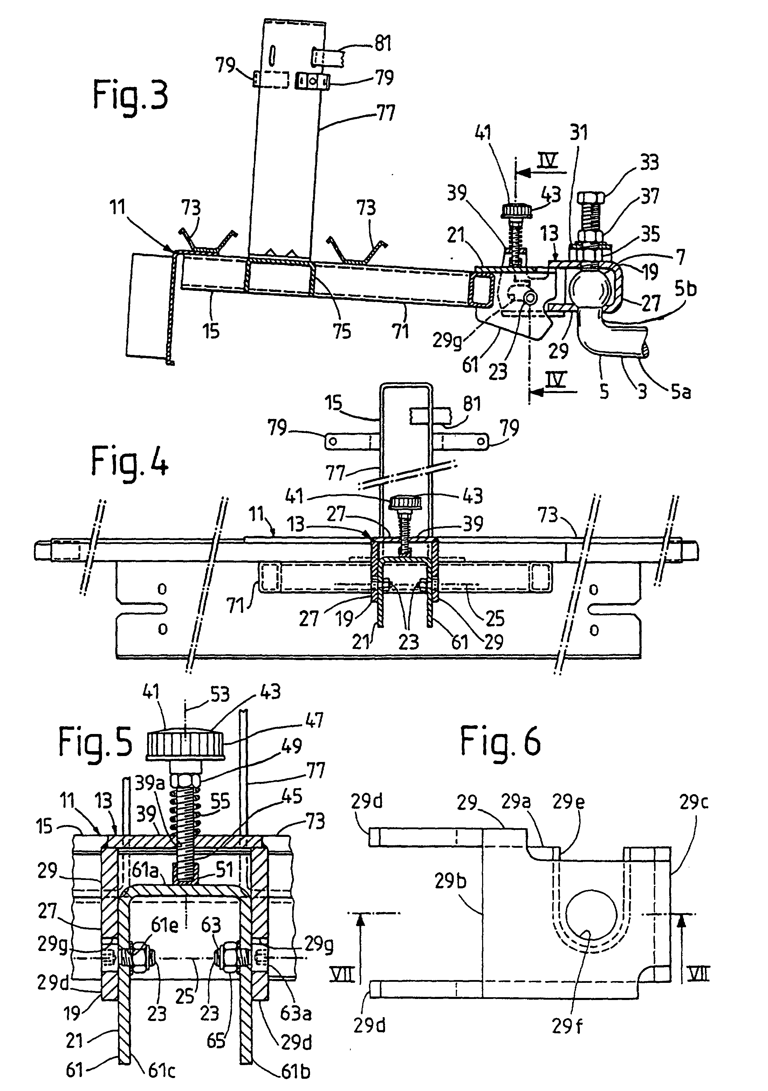

The motorcar 1 shown in the Figures 1 and 2 is provided with a towing bracket 3 rigidly affixed to the car body and/or frame of the motorcar 1 at the back end of the latter. The towing bracket 3 is also shown in Fig. 3 and comprises an angled and/or curved bar 5 having a substantially horizontal portion 5a extending away from the motorcar and an upwards projecting rear portion 5b. The bracket 3 also has a ball 7 rigidly connected to the rear end of the bar 5. The ball 7 has a flat surface on top facing away from the bar 5.

A load carrier 11 is detachably fastened to an element at the rear of the motorcar, viz. to the towing bracket 3. The load carrier 11 comprises an articulation 13 and a holding means 15 for holding a load. The load consists for instance of a bicycle 17 shown in the Figures 1 and 2, but might comprise a second bicycle or one or two mopeds.

The articulation 13 and parts thereof are shown in the Figures 3 to 15 too. The articulation 13 comprises a first articulation means 19 and a second articulation means 21 and at least one trunnion, namely two trunnions 23. The first articulation means 19 is rigidly and detachably fastened to the towing bracket 3 and thereby to the car body of the motorcar 1. The second articulation means 21 is rigidly connected to the holding means 15 and slewably connected to the first articulation means 19 by means of the two trunnions 23. The two trunnions 23 are aligned with one another and together define a pivot axis 25. The pivot axis 25 is a least approximately perpendicular to the longitudinal direction of the motorcar 1 and - when the latter stands on a flat, horizontal ground surface - horizontal.

The first articulation means 19 comprises a bearing member 27 having a one-piece support 29 separately shown in the Figures 6, 7, 8. The support 29 has a bottom wall 29a, a top wall 29b, a front wall or web 29c connecting the front ends of the walls 29a, 29b to one another, and two lateral walls 29d which are continuous with a back portion of the top wall. The various walls are substantially flat, but connected to one another by curved transitions. The bottom wall and top wall are parallel to one another and at least approximately horizontal, when the motorcar stands on a horizontal ground surface. The lateral walls 29d are arranged at opposite sides of the bottom wall and top wall, are parallel to one anotherand vertical, run substantially in the longitudinal direction of the motorcar and project rearwards away from the bottom wall and top wall. The bottom wall 29a is provided with an incision 29e, which runs substantially perpendicular to the longitudinal direction of the motorcar and opens into one of the lateral edges of the bottom wall. The top wall 29b is provided with a hole 29f, i.e. a through bore. Each lateral wall 29d is provided with a bearing and guiding slot 29g. Each bearing and guiding slot 29g has a straight, substantially horizontal main portion 29h and an end portion 29i which makes an obtuse angle with the main portion 29, is inclined downwards away from the latter and forms the front end of the slot, i.e. the slot end which is closer to the front wall 29c or web 29c. Each end of each slot 29g is formed by an arc, viz. a semicircle. The slots 29g are arranged behind the bottom wall 29a and the top wall 29b in a height range which is distinctly below the top wall 29b and slightly above the bottom wall 29a.

The bearing member 27 also comprises a yoke 31 which is disposed above the top wall 29b of the support 29 and shown in the Figures 3 and 12 to 15. The yoke 31 is provided with two flanges rigidly fastened by welding or the like to the top wall 29b. The yoke comprises a hole 31a, i.e.through bore, which is coaxial with the hole 29f of the top wall 29b. A clamping member 33 consisting of a screw or threaded bolt penetrates the holes 29f and 31a. Two nuts 35 and 37 are screwed onto the external thread of the clamping member 33. The nut 35 is arranged between the top wall 29b and the yoke 31. The nut 37 is arranged above the yoke.

The ball 7 of the towing bracket 3 is accommodated in the intermediate space between the bottom plate 29a and the top plate 29b of the support 29. The rear portion 5b of bar 5 disposed below the ball 7 penetrates the incision 29e of the bottom wall 29a. The lower end of the clamping member 33 engages the flat surface on top of the ball 7, wherein the nuts 35, 37 are adjusted in such a manner that the clamping member 33 clamps the support 29 rigidly, but detachably to the towing bracket 3. Thus, the clamping member 33 and the two nuts 35, 37 form fastening means to fasten the support 29 and the complete first articulation means 19 to the towing bracket and thereby to the motorcar.

For fastening the load carrier 11 to the motorcar 1, the support 29 can be slided along the incision 29e onto the towing bracket 3 and then be clamped thereto by means of the clamping member 33. The support can of course be removed from the towing bracket if desired. Thus, the first articulation means can be connected to the motorcar and removed therefrom simply and rapidly by tightening or loosening the single threaded clamping member 33.

Each lateral wall 29d has a projection which is disposed above the slot 29g and projects upwards. The bearing member 27 also comprises a flat crossmember 39 which is attached, for example welded, to the upper ends of said projections of the lateral walls 29d. The crossmember 39 has a through bore 39a with an internal thread. A securing means 41 comprises an adjustable locking member 43. The latter comprises a bolt 45 having an external thread and a knurled knob 47 rigidly connected to the upper end of the bolt. The bolt 45 is for example screwed into a threaded bore of the knob and secured by means of a nut 49. However, the bolt and knob together could be formed of a one-piece screw. The bolt 45 penetrates the bore 39a. The threads of the bore 39a and bolt 45 engage one another. A protective cap 51 consisting of plastics is fastened to the lower end of the bolt 45. The bore 39a and the bolt 45 have a common axis which is at least approximately vertical and designated hereafter as securing axis 53. The locking member 43 can be rotated and thereby be displaced along the securing axis 53. A helical spring 55 is arranged around the bolt 45 between the upper surface of the crossmember 39 and the nut 49.

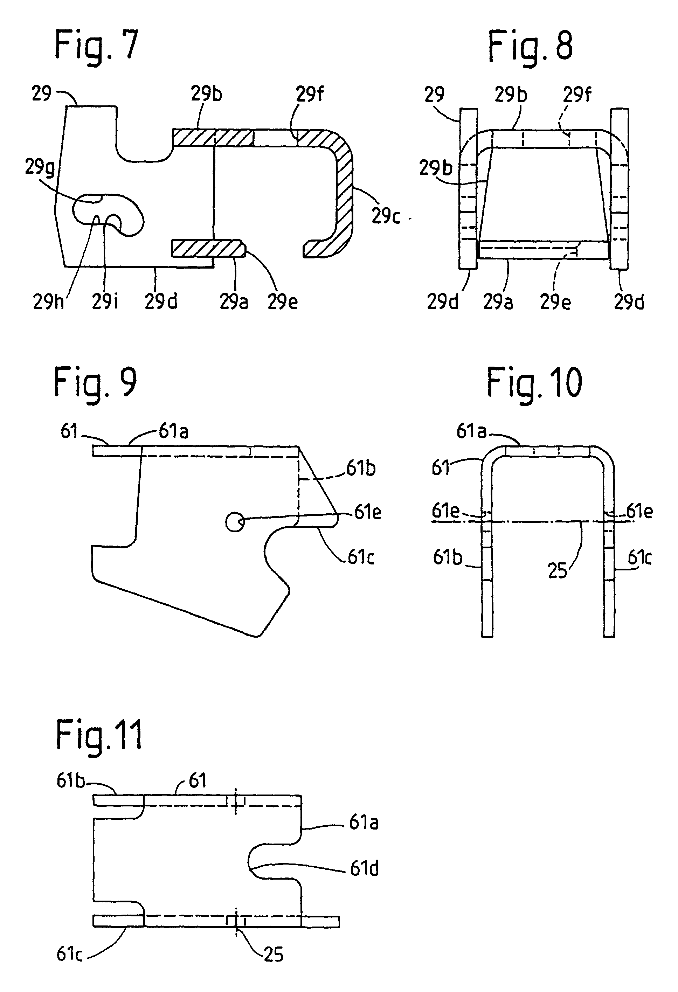

The second articulation means 21 consists substantially of a one-piece pivot body 61 which is separately shown in the Figures 9, 10 and 11. The pivot body 61 is in general U-shaped and has a substantially flat top wall 61a or web 61a connecting two substantially vertical and flat lateral walls 61b and 61c to one another. The top wall 61a or web 61a has a longitudinal incision 61d opening into the front edge of the top wall. Each lateral wall 61b, 61c has a hole 61e, i.e. a through bore. The two holes 61e are aligned to one another and hold the two trunnions 23, so that the holes 61e and trunnions 23 together define the pivot axis 25. Each trunnion 23 comprises a hexagon socket head cap screw 63 having a head 63a and a threaded bolt penetrating one of the holes 61e. The head 63a is disposed on the outside of the associated lateral wall 61b or 61c and has a substantially cylindrical, smooth circumferential surface serving as slide face. Each screw 63 is affixed to the associated lateral wall 61b, 61c by means of a nut 65 and a locking ring disposed on the inside of the lateral wall, i.e. between the two lateral walls 61b, 61c.

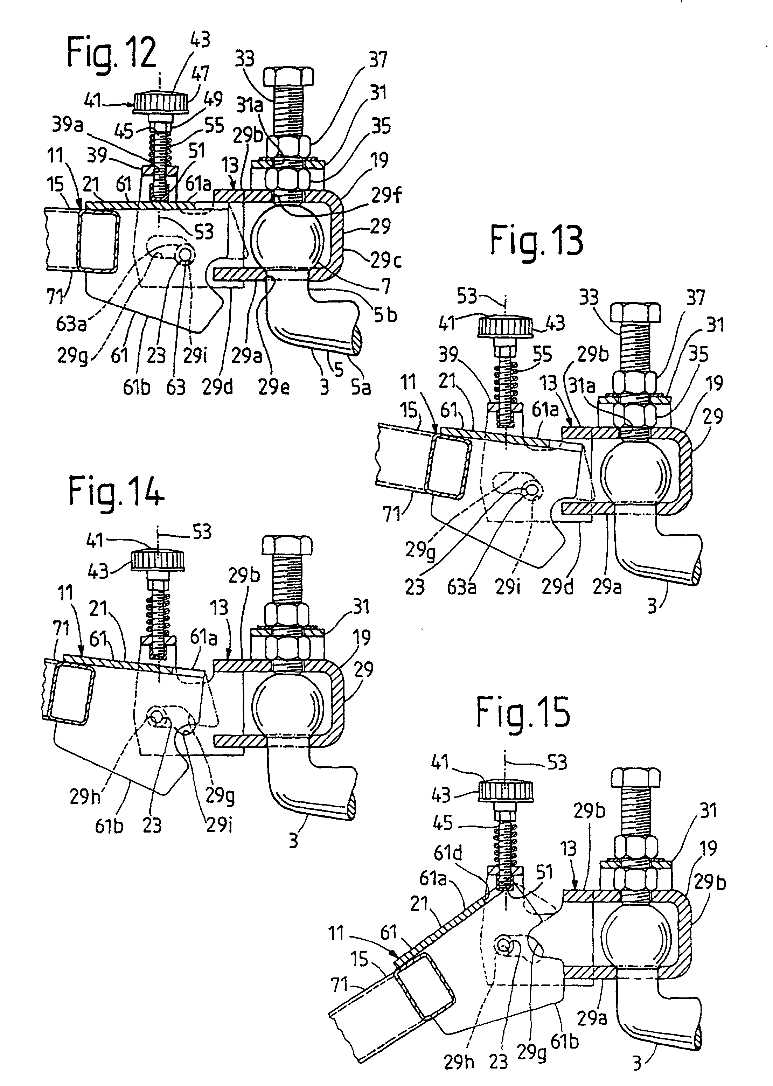

The pivot body 61 is disposed on the rear side of the support 29 and partly projects with little play between the lateral walls 29d of the support (29). Each trunnion 23 projects into one of the slots 23g and thereby engages the support 29 adjustably. More specifically, the head 63a of each screw 63 is accommodated with little radial play in one of the bearing and guiding slots 29g of the support 29, so that the heads 63a can be swivelled about the pivot axis 25 within the slots and also can be displaced along the slots. It is remarked that the nuts 65 have been omitted in the Figures 12 to 15 for the sake of clarity.

The holding means 15 comprises a U-shaped bow 71 rigidly fastened by welding or the like to the back end of the pivot body 61. Two V-shaped and/or U-shaped rails 73 extend transversely to the longitudinal direction of the motorcar, are fastened on the upper side of the two legs of the bow 71 and serve to hold the two wheels of a bicycle 17 or moped. A crossbar 75 is fastened to the two legs of the bow 71 and holds an upwards projecting post 77. The post 77 is provided with two clamps 79. Each clamp 79 is configured for clamping a pedal of a bicycle 17. The frame of the (or each) bicycle is moreover connected to the post 77 by means of a flexible tape or belt 81 (shown only in the Figures 3 and 4) or the like.

When the second articulation means 21, the pivot body 61 thereof and the holding means 15 are in the normal position represented in the Figures 1, 3 to 5 and 12, the front portion of the pivot body 61 projects between the bottom wall 29a and the top wall 29b of the support 29. The heads 63a of the screws 63 forming the trunnions 23 are accommodated in the inclined end portions 29i of the bearing and guiding slots 29g. The securing axis 53 defined by the locking member 43 is at least approximately perpendicular to the pivot axis 25. However, the securing axis does not cross the pivot axis 25 and passes behind the latter and behind the trunnions 23 in the normal position. When the locking member 43 of the securing means 41 is screwed down and tightened, it acts upon and/or engages the top wall 61a of the pivot body 61 and exerts a pressing force onto the pivot body 61. This pressing force is directed downwards along the securing axis 53 and presses the trunnions 23 against the lower ends of the end portions 29i of the slots 29g and, thus, against the front ends of the slots. The surfaces of the support 29 bounding the front ends of the slots together form a first stop means of the support 29 and bearing member 27. The force applied by the locking member 43 onto the pivot body 61 also produces a torque with respect of the pivot axis. This torque presses the top wall 61a of the pivot body 61 upwards and towards the lower surface of the top wall 29b of the support 29. Thus, the top wall 29b forms a second stop means of the support 29 and the bearing member. The single locking member 43 fastens and secures the second articulation means 21 in the normal position. The spring 55 is compressed between the crossmember 39 and the nut 49 and avoids that the locking member 43 gets loose unintentionally. The bow 71 of the holding means is in the normal position inclined slightly upwards to the back, so that the complete load carrier is in a fairly high level above the road or other ground surface on which the motorcar stands and/or drives. The bow 71 and the post 77 are by the way represented in Fig. 4 as if they were horizontal and vertical, respectively, for the sake of simplicity and clarity.

The motorcar 1 has a trunk disposed at the back of the motorcar. If the motorcar is at standstill and if a person desires to open the lid of the trunk, the person can manually seize the knob 47 of the locking member 43 and rotate the latter, so that the locking member is moved away from the pivot body and that the latter and the locking member get loose. The spring 55 can thereby expand and gets relaxed. Then the person can swivel the holding means 15 and the second articulation means 21 slightly upwards, so that these means 15 and 21 get into the intermediate position shown in Fig. 13. The trunnions 23 are thereby still accommodated within the inclined end portions 29i of the slots 29g.

Afterwards the person can pull the holding means 15 and the second articulation means 21 to the back, so that these means reach the position shown in Fig. 14. The trunnions 23 slide thereby along the slots 23g to the back ends of the slots. Then the top wall 61a of the pivot body 61 is behind the top wall 29b of the support 29.

Now the person can tilt the holding means 15 and the second articulation means 21 into the lower position shown in the Figures 2 and 15. The bolt 45 and the cap 51 can thereby penetrate the incision 61d. The weight of the holding means 15 and the held bicycle 17 exerts now a force and a torque onto the second articulation means 21 and the pivot body 61 thereof. This force and torque pull the trunnions against the back ends of the slots and press the lower portions of the front edges of the lateral walls 61b, 61c against the edge at the back end of the bottom wall 29a of the support 29. Thus, the surfaces of the support 29 bounding the back ends of the slots form third stop means of the support and said edge of the bottom wall 29a serves as fourth stop means of the support. The third and fourth stop means hold the second articulation means and the holding means in said lower position. The pivot axis 25 can approximately cross the securing axis 53 in this position. The bow 71 is inclined downwards to the back in the lower position. However, the lowermost portion of the holding means 15 remains still a distance above the ground surface on which the motorcar stands.

It may be inferred from the preceding description and the drawings that the articulation 13, the securing means 41 and also the fastening means for fastening the first articulation means 19 to the towing bracket are composed of a relatively small number of initially separate parts. The one-piece support 29 of the first articulation means 19 and the one-piece pivot body 61 of the second articulation means 21 can for example, be made from initially flat metal plates, such as steel plates, which are cut to size and afterwards bent and/or angled. Moreover, the fastening means, trunnions and securing means consist for the most part of simple and/or commercially available elements, such as screws, nuts, a curled knob, a threaded bolt and the like. The holding means 15 is also formed relatively simple. Therefore, the articulation, fastening means, securing means and the complete load carrier can be manufactured and assembled at low costs.

The load carrier can be modified in various manners. The two aligned trunnions 23 might, for example, be replaced by a trunnion having a one-piece bolt penetrating both slots 23g. The two lateral walls 29d comprising the two slots 29g might possibly be replaced by a relatively thick support portion projecting between the lateral walls of the pivot body and having only one bearing and guiding slot.

The motorcar might have a backdoor instead of a trunk disposed at the back of the motorcar. Then the articulation would permit to make the backdoor accessible in the lower position of the second articulation means and holding means. The holding means may possibly be configured for holding another load instead of one or two bicycles and/or moped(s), for example at least a pair of skis and/or at least one snowboard of the like.

## Claims

1. A load carrier for fastening a load, particularly at least one bicycle (17) and/or moped, to a motorcar (1), the load carrier comprising a first articulation means (19) designed to be fastened to the motorcar (1), a second articulation means (21) slewably connected to the first articulation means (19) by at least one trunnion (23) and connected to a holding means (15) for holding the load, and a securing means (41) for securing the second articulation means (21) in a normal position, whereby the or each trunnion (23) is displaceable along a slot (29g) of the first articulation means (19), **characterized in that** the securing means (41) is formed for acting upon the second articulation means (21) in the normal position in such a manner that the or each trunnion (23) is pressed against a first stop means and that said second articulation means (21) is pressed by a torque against a second stop means.

2. A load carrier according to claim 1, **characterized in that** said first articulation means (19) has two walls (29d) which are spaced from one another and each of which is provided with the or a slot (29g) guiding the or one trunnion (23), wherein the two walls (29d) preferably consist of portions of a one-piece support (29).

3. A load carrier according to claim 2, **characterized in that** said second articulation means (21) has two walls (61b, 61c) spaced from one another and that the or a trunnion (23) is fastened to each of these walls (61b, 61c) of said second articulation means (21).

4. A load carrier as claimed in any of claims 1 to 3, **characterized in that** the or each slot (29g) has an end portion (29i) which accommodates at least a portion of the at least one trunnion (23) in the normal position and forms said first stop means, and that said first articulation means (19) comprises a portion, for example a top wall (29b), forming said second stop means.

5. A load carrier according to any of claims 1 to 4, **characterized in that** the at least one trunnion (23) defines a pivot axis (25) and that the first articulation means (19) holds a locking member (43) of the securing means (41) in such a manner that the locking member (43) is adjustable along a securing axis (53) which is perpendicular to the pivot axis (25) and spaced from the pivot axis (25), when the second articulation means (21) is in the normal position.

6. A load carrier according to the claims 4 and 5, **characterized in that** the or each slot (29g) has a straight main portion (29h) and that said end portion (29i) is angled and/or curved away from the main portion (29h) to the side facing away from the locking member (43).

7. A load carrier according to claim 5 or 6, **characterized in that** the first articulation means (19) comprises a bore (39a) having an internal thread and that the locking member (43) comprises a bolt (45) which penetrates the bore (39a) and has an external thread engaging the internal thread of the bore (39a).

8. A load carrier according to any of claims 1 to 7, **characterized in that** the first articulation means (19) is formed for being fastened to a towing bracket (3) of the motorcar (1),that the towing bracket (3) has a bar (5) and a ball (7) arranged at an end of the bar (5), that the first articulation means (19) has a bottom wall (29a) and a top wall (29b), that the bottom wall (29a) and the top wall (29b) together limit an intermediate space for accommodating the ball (7), that the bottom wall (29a) has an incision (29e) permitting to insert and accommodate a bar portion (5b) disposed below the ball (7) and that the top wall (29b) has a hole (29f) penetrated by a clamping member (33) for clamping the first articulation means (19) to the ball (7).

## Patentansprüche

1. Lastträger zum Befestigen einer Last, insbesondere eines Fahrrads (17) und/oder Mopeds, an einem Kraftwagen (1), wobei der Lastträger erste, zum Befestigen am Kraftwagen (1) vorgesehene Gelenkmittel (19), zweite Gelenkmittel (19), die durch mindestens einen Schwenkzapfen (23) schwenkbar mit den ersten Gelenkmitteln (19) verbunden sind und mit Haltemitteln (15) zum Halten der Last verbunden sind, und Sicherungsmittel (41) zum Sichern der zweiten Gelenkmittel (21) in einer Normal-Stellung aufweist, wobei der bzw. jeder Schwenkzapfen (23) entlang einem Schlitz (29g) der ersten Gelenkmittel (19) verschiebbar ist, **dadurch gekennzeichnet, dass** die Sicherungsmittel (41) ausgebildet sind, um in der Normal-Stellung derart an den zweiten Gelenkmitteln (21) anzugreifen, dass der bzw. jeder Schwenkzapfen (23) gegen erste Anschlagmittel gedrückt wird und dass die zweiten Gelenkmittel (21) durch ein Drehmoment gegen zweite Anschlagmittel gedrückt werden.

2. Lastträger nach Anspruch 1, **dadurch gekennzeichnet, dass** die genannten, ersten Gelenkmittel (19) zwei Wände (29d) aufweisen, die in Abstand voneinander stehen und von denen jede den oder einen Schlitz (29g) aufweist, der den oder einen Schwenkzapfen (23) führt, wobei die zwei Wände (29d) vorzugsweise aus Abschnitten eines einstückigen Supports (29) bestehen.

3. Lastträger nach Anspruch 2, **dadurch gekennzeichnet, dass** die genannten, zweiten Gelenkmittel (21) zwei voneinander in Abstand stehende Wände (61b, 61c) haben und dass der oder ein Schwenkzapfen (23) an jeder dieser Wände (61b, 61c) der genannten, zweiten Gelenkmittel (21) befestigt ist.

4. Lastträger nach einem der Ansprüche 1 bis 3, **dadurch gekennzeichnet, dass** der bzw. jeder Schlitz (29g) einen Endabschnitt (29i) hat, der in der Normal-Stellung mindestens einen Abschnitt des mindestens einen Schwenkzapfens (23) aufnimmt und die genannten, ersten Anschlagsmittel bildet und dass die genannten, ersten Gelenkmittel (19) einen die genannten, zweiten Anschlagmittel bildenden Abschnitt, beispielsweise eine Deckwand (29b), aufweisen.

5. Lastträger nach einem der Ansprüche 1 bis 4, **dadurch gekennzeichnet, dass** der mindestens eine Schwenkzapfen (23) eine Schwenkachse (25) definiert und dass die ersten Gelenkmittel (19) ein Sperrelement (43) der Sicherungsmittel (41) derart halten, dass das Sperrelement (43) entlang einer Sicherungsachse (53) verstellbar ist, die senkrecht zur Schwenkachse (25) ist und von der Schwenkachse (25) in Abstand steht, wenn sich die zweiten Gelenkmittel (21) in der Normal-Stellung befinden.

6. Lastträger nach den Ansprüchen 4 und 5, **dadurch gekennzeichnet, dass** der oder jeder Schlitz (29g) einen geraden Hauptabschnitt (29h) hat und dass der genannte Endabschnitt (29i) vom Hauptabschnitt (29h) weg auf die denn Sperrelement (43) abgewandte Seite abgewinkelt und/oder abgebogen ist.

7. Lastträger nach Anspruch 5 oder 6, **dadurch gekennzeichnet, dass** die ersten Gelenkmittel (19) eine Bohrung (39a) mit einem Innengewinde aufweisen und dass das Sperrelement (43) einen Bolzen (45) aufweist, der die Bohrung (39a) durchdringt und ein in das Innengewinde der Bohrung (39a) eingreifendes Aussengewinde hat.

8. Lastträger nach einem der Ansprüche 1 bis 7, **dadurch gekennzeichnet, dass** die ersten Gelenkmittel (19) für die Befestigung an einem Zugarm (3) des Kraftwagens (1) ausgebildet sind, dass der Zugarm (3) eine Stange (5) und eine an einem Ende der Stange (5) angeordnete Kugel (7) hat, dass die ersten Gelenkmittel (19) eine Bodenwand (29a) und eine Deckwand (29b) haben, dass die Bodenwand (29a) und die Deckwand (29b) zusammen einen Zwischenraum zum Aufnehmen der Kugel (7) begrenzen, dass die Bodenwand (29a) einen das Einführen und Aufnehmen eines sich unter der Kugel (7) befindenden Stangenabschnitts (5b) ermöglichenden Einschnitt (29e) hat und dass die Deckwand (29b) ein Loch (29f) hat, das von einem Klemmelement (33) zum Festklemmen der ersten Gelenkmittel (19) an der Kugel (7) durchdrungen ist.

## Revendications

1. Porte-charge pour attacher une charge, en particulier une bicyclette (17) et/ou un cyclomoteur, à un véhicule automobile (1), la porte-charge comprenant un premier moyen d'articulation (19) destiné à être fixé au véhicule automobile (1), un deuxième moyen d'articulation (21) connecté de manière pivotante au premier moyen d'articulation (19) par au moins un tourillon (23) et connecté à un moyen de support (15) pour porter la charge, et un moyen de fixation (41) pour fixer le deuxième moyen d'articulation (21) dans une position normale, le ou chaque tourillon (23) étant déplaçable le long d'une fente (29g) du premier moyen d'articulation (19), **caractérisé en ce que** le moyen de fixation (41) est formé pour agir sur le deuxième moyen d'articulation (21) dans la position normale de sorte que le ou chaque tourillon (23) est appuyé contre un premier moyen d'arrêt et que ledit deuxième moyen d'articulation (21) est serré par un couple contre un deuxième moyen d'arrêt.

2. Porte-charge selon la revendication 1, **caractérisé en ce que** ledit premier moyen d'articulation (19) a deux parois (29d) qui sont espacées l'une de l'autre et dont chacune est pourvue de la ou d'une fente (29g) guidant le ou un tourillon (23), dans lequel les deux parois (29d) consistent de préférence en parties d'un support (29) en une pièce.

3. Porte-charge selon la revendication 2, **caractérisé en ce que** ledit deuxième moyen d'articulation (21) a deux parois (61b, 61c) espacées l'une de l'autre et **en ce que** le ou un tourillon (23) est fixé à chacune de ces parois (61b, 61c) dudit deuxième moyen d'articulation (21).

4. Porte-charge selon une quelconque des revendications 1 à 3, **caractérisé en ce que** la ou chaque fente (29g) a une partie extrême (29i) qui accueille au moins une partie dudit au moins un tourillon (23) dans la position normale et forme ledit premier moyen d'arrêt, et **en ce que** ledit premier moyen d'articulation (19) comprend une partie, par exemple, une paroi supérieure (29b), formant ledit deuxième moyen d'arrêt.

5. Porte-charge selon une quelconque des revendications 1 à 4, **caractérisé en ce que** ledit au moins un tourillon (23) définit un axe de pivotement (25) et **en ce que** le premier moyen d'articulation (19) tient un élément de verrouillage (43) du moyen de fixation (41) de sorte que l'élément de verrouillage (43) est ajustable le long d'un axe de fixation (53) qui est perpendiculaire à l'axe de pivotement (25) et espacé de l'axe de pivotement (25), quand le deuxième moyen d'articulation (21) est dans la position normale.

6. Porte-charge selon les revendications 4 et 5, **caractérisé en ce que** la ou chaque fente (29g) a une partie principale rectiligne (29h) et **en ce que** ladite partie extrême (29i) s'étend à un angle et / ou en tournant par rapport à la partie principale (29h) vers le côté opposé au membre de verrouillage (43).

7. Porte-charge selon les revendications 5 ou 6, **caractérisé en ce que** le premier moyen d'articulation (19) comprend une forure (39a) ayant un filetage intérieur et **en ce que** le membre de verrouillage (43) comprend un boulon (45) qui pénètre dans la forure (39a) et a un filetage extérieur entrant en prise avec le filetage intérieur de la forure (39a).

8. Porte-charge selon une quelconque des revendications 1 à 7, **caractérisé en ce que** le premier moyen d'articulation (19) est formé pour être fixé à un crochet d'attelage (3) du véhicule automobile (1), **en ce que** le crochet d'attelage (3) a une barre (5) et une boule (7) disposée au bout de la barre (5), **en ce que** le premier moyen d'articulation (19) a une paroi inférieure (29a) et une paroi supérieure (29b), **en ce que** la paroi inférieure (29a) et la paroi supérieure (29b) limitent ensemble un espace intermédiaire pour accueillir la boule (7), **en ce que** la paroi inférieure (29a) a une incision (29e) permettant d'insérer et d'accueillir une partie (5b) de la barre disposée en dessous de la boute (7) et **en ce que** la paroi supérieure (29b) a un orifice (29f) dans lequel pénètre un élément de serrage (33) pour fixer le premier moyen d'articulation (19) à la boule (7).
